# EUROPEAN PATENT APPLICATION

(11) **EP 2 211 236 A1**
(43) Date of publication of application: **28.07.2010**
(21) Application number: 08846089.4
(22) Date of filing: 27.10.2008
(51) Int. Cl.: G03G 15/00, B05D 5/12, B05D 7/02, C08J 7/04, C09D 5/24, C09D 7/12, C09D 175/04, F16C 13/00

(54) **SURFACE-TREATING LIQUID FOR CONDUCTIVE ELASTIC LAYER, METHOD OF SURFACE TREATMENT OF THE SAME, AND SURFACE-TREATED CONDUCTIVE MEMBER**

(30) Priority: 31.10.2007 JP 2007284258; 31.10.2007 JP 2007284300
(71) Applicant: Sumitomo Rubber Industries, Ltd., Kobe-shi, Hyogo 651-0072 (JP)
(72) Inventor: TAJIMA, Kei, Kobe-shi Hyogo 651-0072 (JP); OKUYAMA, Hideyuki, Kobe-shi Hyogo 651-0072 (JP)
(74) Representative: Thul, Stephan
(86) International application number: PCT/JP2008/069470
(87) International publication number: WO 2009/057560

(57) **Abstract**

A conductive member of a paper feed roller for use in an electrophotographic apparatus is provided which retains electrical conductivity in an adequate range, is effectively prevented from deteriorating in durability, and is reduced in the voltage dependence of electrical resistance and in resistance unevenness. This conductive member enables satisfactory print quality to be obtained over long. The conductive member comprises:
a conductive elastic layer formed from one or more elastic materials selected from the group consisting of rubbers, resins, and thermoplastic elastomers; and a coating layer formed by applying a surface-treating liquid to the outer surface of the conductive elastic layer and then thermally curing the coating. The surface-treating liquid comprises:
a medium containing, dispersed and/or dissolved therein, either a polyisocyanate compound or a combination of a polyol compound and an isocyanate compound; and carbon nanotubes dispersed in the medium.

## Description

### TECHNICAL FIELD

0001 The present invention relates to a surface-treating liquid for a conductive elastic layer, a surface-treating method, and a surface-treated conductive member. More particularly the present invention is intended to prevent the deterioration of the durability of the conductive member such as a conductive roller to be used for a conductive mechanism or the like of an electrophotographic apparatus, obtain a proper degree of conductivity, decrease the degree of the dependence of the electrical resistance value thereof on a voltage and the degree of the electrical resistance variation thereof and provide a fine printed image quality for a long time.

### BACKGROUND ART

0002 Various conductive members represented by a conductive roller such as a charging roller for uniformly charging a photosensitive drum, a toner supply roller for transporting toner, a developing roller for attaching the toner to a photoreceptor, a transfer roller for transferring a toner image from the photoreceptor to paper, and the like are used in the conductive mechanism of an electrophotographic apparatus such as a printer, an electrophotographic copying machine, a facsimile apparatus, and the like and the conductive mechanism of an electrostatic recording apparatus. 0003 The conductive roller is constructed of a columnar core and an elastic layer, concentrically layered on the periphery of the core, which is composed of a vulcanized rubber, a resin, a thermoplastic elastomer, and the like and is demanded to have various performances such as conductivity, unpolluting properties, dimensional stability, and the like in dependence on a use. When the conductive roller is used for a long time, there occurs a phenomenon that residual toner particles and chemicals added to the toner attach to the surface of the conductive roller and thereby an image deteriorates. That is, the conductive roller has a problem that its durability deteriorates. Other conductive members are also demanded to have performance of preventing the durability deterioration.

0004 To prevent the durability deterioration, the surface of the elastic layer and the like of the conductive member have been hitherto treated with an isocyanate compound or polyurethane resin.

0005 In recent years, the utilization of a carbon nanotube is investigated in various fields. A carbon nanotube-dispersed liquid in which the carbon nanotubes are uniformly dispersed in a solvent is proposed, as disclosed in Japanese Patent Applications Laid-Open No. 2003-300716 (patent document 1), Japanese Patent Applications Laid-Open No. 2004-276232 (patent document 2), and Japanese Patent Applications Laid-Open No. 2007-63051 (patent document 3).
0006 Patent document 1: Japanese Patent Application Laid-Open No. 2003-300716
Patent document 2: Japanese Patent Application Laid-Open No. 2004-276232
Patent document 3: Japanese Patent Application Laid-Open No. 2007-63051

### DISCLOSURE OF THE INVENTION

### PROBLEM TO BE SOLVED BY THE INVENTION

0007 The coating layer formed by being coated with the isocyanate compound or the polyurethane resin improves durability deterioration. But the materials of this kind have a high electrical resistance value. Thus to adjust the electrical resistance value of the conductive member to a desired electrical resistance value, it is necessary to add a conductive agent such as carbon black, an ionic conductivity imparting agent or the like to the isocyanate compound or the polyurethane resin. But when the coating layer contains the carbon black, the electrical resistance value of the conductive member depends greatly on a voltage, and the conductive member is charged non-uniformly. Thereby there occurs a problem that a print variation is generated. When the coating layer contains the ionic conductivity imparting agent, the conductive agent bleeds and thereby the conductive member becomes adhesive. As a result, when the conductive member contacts the photosensitive drum for a long time, the photosensitive drum and the conductive member stick to each other. Thus there occurs a problem that the conductive member lacks storage performance.
The carbon nanotube-dispersed liquids of the patent documents 1 through 3 in which the carbon nanotubes are dispersed do not prevent the durability deterioration of the conductive member nor have necessary properties as the coating layer of the conductive member.
As described above, the surface of the conductive member is demanded to be so treated that durability deterioration thereof is effectively prevented, the conductivity thereof is kept in a proper range, and the charging characteristic and using performance thereof are excellent.

0008 The present invention has been made in view of the above-described problem. It is an object of the present invention to keep the conductivity of a conductive member such as a conductive roller to be used for a conductive mechanism of an electrophotographic apparatus in a proper range, effectively prevent the durability thereof from deteriorating, and decrease the degree of dependence of an electrical resistance value thereof on a voltage and the degree of a variation of the electrical resistance thereof so that a fine printed image quality is obtained for a long time.

### MEANS FOR SOLVING THE PROBLEM

0009 To solve the above-described problem, the first invention provides a surface-treating liquid for coating a surface of a conductive member, wherein carbon nanotubes are dispersed in a medium in which a multi-isocyanate compound is dispersed and/or dissolved.

0010 The second invention provides a surface-treating liquid for coating a surface of a conductive member, wherein carbon nanotubes are dispersed in a medium containing a polyol compound and an isocyanate compound and/or a reactant of the polyol compound and the isocyanate compound.

0011 As a result of the present inventors' energetic researches, they have found that both of the surface-treating liquid of the first invention in which the carbon nanotubes are dispersed in the medium containing the multi-isocyanate compound and the surface-treating liquid of the second invention in which the carbon nanotubes are dispersed in the medium containing the polyol compound and the isocyanate compound and/or the reactant of the polyol compound and the isocyanate compound are capable of forming on the surface of the conductive member the coating layer which has a proper degree of conductivity, effectively prevents its durability from deteriorating, and decreases the degree of dependence of an electrical resistance value thereof on a voltage and the degree of a variation of the electrical resistance thereof.
That is, because the surface-treating liquid of the present invention for the conductive member contains the carbon nanotube as its conductive agent, the surface-treating liquid is capable of forming the coating layer which greatly improves the problem of the dependence of the electrical resistance value on a voltage and the degree of the electrical resistance variation unlike a case where carbon black is used for the coating layer and has a proper degree of conductivity imparted thereto without generating adhesion unlike a case where an ionic conductivity imparting agent is used for the coating layer. In addition because the coating layer formed with the surface-treating liquid contains the hardened multi-isocyanate compound as its matrix resin, the coating layer is capable of effectively preventing its durability from deteriorating.

0012 As the carbon nanotube used in the first and second inventions, a single-wall carbon nanotube consisting of one layer of a tubularly formed graphene sheet in which carbon atoms bonded to one another like a honeycomb spread in a plane, a multiwall carbon nanotube consisting of not less than two concentric and tubular layers, and the coiled single-wall carbon nanotube and the coiled multiwall carbon nanotube. It is preferable to use the multiwall carbon nanotube. A single-wall construction and a multiwall construction may be mixedly present in the carbon nanotube.
It is possible to use a carbon material having a structure, a part of which has the structure of the carbon nanotube. It is also possible to use a carbon nanotube, both sides of which are hollow, a carbon nanohorn having a configuration to be obtained by closing one side of the carbon nanotube, and a cup-shaped nano-carbon substance having a configuration to be obtained by making the head of the carbon nanohorn hollow.

0013 It is preferable to use single-wall and multiwall carbon nanotubes having a diameter of 1 to 50nm and a length of 0.01 to 50µm.
It is especially preferable to use the multiwall carbon nanotube having a diameter of 10 to 20nm and a length of 0.1 to 10µm. The carbon nanotube having an aspect ratio of not less than 10 is preferable.
Because the carbon nanotubes having the size of the above-described extent are dispersible uniformly and contact each other easily in the surface-treating liquid, the coating layer having a uniform conductivity can be easily formed.
As described later, to disperse the carbon nanotubes in the medium containing water as its main constituent element, the carbon nanotubes may be surface-treated by means of oxidation treatment.

0014 It is favorable that the carbon nanotube is contained in the surface-treating liquid of the present invention at a ratio of not less than 0.1 mass% nor more than 1.5 mass%. It is more favorable that the carbon nanotube is contained therein at a ratio of not less than 0.3 mass% nor more than 1.2 mass%.
This is because when the carbon nanotube is contained in the surface-treating liquid at less than 0.1 mass%, the content of the carbon nanotube in the coating layer is small and thus a sufficient conductivity cannot be imparted to the coating layer. When the content of the carbon nanotube exceeds 1.5 mass%, the carbon nanotubes entwine and masses are liable to be generated. Thus there is a fear that the electrical resistance value becomes nonuniform.

0015 It is favorable that except the medium of the surface-treating liquid, the carbon nanotube is contained in a total solid content at not less than 0.5 mass% nor more than 5.0 mass%.
The reason the mixing ratio of the carbon nanotube is set to the above-described range is because when the mixing ratio of the carbon nanotube is less than 0.5 mass% of the total solid content, the content of the carbon nanotube in the coating layer is small. Thus it is impossible to impart a sufficient degree of conductivity to the coating layer. When the mixing ratio of the carbon nanotube exceeds 5.0 mass%, the mixing amount of the carbon nanotube is excessive. Thereby the carbon nanotubes entwine and masses are liable to be generated and there is a fear that a nonuniform electrical resistance value is generated. It is more favorable that the carbon nanotube is contained in the total solid content at not less than 1.0 mass% nor more than 3.0 mass%.
Because the carbon nanotube is excellent in its conductivity, as described above, by using a small amount of the carbon nanotube, it is possible to obtain a desired electrical resistance value and in addition decrease the degree of the dependence of the electrical resistance value on a voltage and the degree of the electrical resistance variation.

0016 As described above, the multi-isocyanate compound is dispersed and/or dissolved in the surface-treating liquid of the first invention. The hardened multi-isocyanate compound shows excellent results in the durability against paper feeding.
The "multi-isocyanate compound" is the aliphatic and/or alicyclic diisocyanates or polyisocyanate derived therefrom and reacts with water and itself when it is heated to generate a hardened substance.
As the aliphatic and/or the alicyclic diisocyanates forming the multi-diisocyanate compound, 2,4-tolylene diisocyanate, 2,6-tolylene diisocyanate, 4,4'-diphenylmethane diisocyanate, m-phenylene diisocyanate, xylylene diisocyanate, tetramethylene diisocyanate, hexamethylene diisocyanate, 1,4-cyclohexylene diisocyanate, 4,4'-dicyclohexylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, and isophorone diisocyanate are listed.
In addition modified forms such as an isocyanurate body, a burette body, an adduct body, an allophanate body of the multi-isocyanate compound are listed. The isocyanurate body of the hexamethylene diisocyanate is preferably used because it is excellent in the durability of surface treatment.

0017 It is favorable that the mixing amount of the multi-isocyanate compound is not less than 80 mass% nor more than 100 mass% of a resin component of the total solid content contained in the surface-treating liquid. The mixing amount of the multi-isocyanate compound is more favorably 90 to 100 mass% and especially favorably 100 mass%.
To enhance workability in surface-treating liquid applying and hardening steps and perform uniform coating, the multi-isocyanate compound is contained in the surface-treating liquid at favorably not less than 15 mass% nor more than 50 mass% and at more favorably not less than 20 mass% nor more than 40 mass%.
It is favorable that the mixing amount of the multi-isocyanate compound is not less than 80 mass% nor more than 99.9 mass% of the total solid content contained in the surface-treating liquid. The mixing amount of the multi-isocyanate compound is more favorably not less than 92.0 mass% nor more than 99.0 mass%.

0018 It is preferable that the isocyanate group of the multi-isocyanate compound is blocked (masked). By blocking the isocyanate group, it is possible to suppress the reactivity of the isocyanate compound having a high reactivity, which is difficult to manage its quality, prolong the pot life, and facilitate the quality management of the surface-treating liquid.
"The isocyanate group is blocked" means a state where the isocyanate group is in reaction with a compound capable of reversibly reacting with the isocyanate group, and the reactivity of the isocyanate group is inactivated. As a blocking agent for blocking the isocyanate group, phenols, ε-caprolactams, β-diketones, oximes, and the like are listed. The β-diketones, the oximes, and the ε-caprolactams are preferable because these blocking agents are excellent in allowing the balance between the quality stability of the treating liquid and the degree of dissociation to be favorable.

0019 In the surface-treating liquid of the second invention, the polyol compound and the isocyanate compound and/or the reactant of the polyol compound and the isocyanate compound are contained in the medium.
The polyol compound, the isocyanate compound, and the reactant thereof are dispersed and/or dissolved in the medium.
The polyol compound and the isocyanate compound are present in an non-reacted state, a partly reacted state or in a mixed state.
When polyurethane resin obtained by thermosetting the polyol compound and the isocyanate compound is used as resin for forming the coating layer on the surface of the conductive member, the polyurethane resin shows an excellent result in its paper feeding durability.

0020 The polyol compound is a polyvalent hydroxyl compound having at least two hydroxyl groups in one molecule. As the polyvalent hydroxyl compound, aliphatic hydrocarbon polyols, polyether polyols, polyester polyols, acrylic polyols, fluorine-containing polyols, epoxy polyols, polycarbonate polyols, and urethane polyols are exemplified. Of these polyol compounds, it is preferable to use the acrylic polyols and the urethane polyols.

0021 As the acrylic polyols, those obtained by copolymerizing a polymerizable monomer having not less than one active hydrogen in one molecule with a monomer copolymerizable therewith are listed. It is possible to exemplify acrylic polyol resins obtained by polymerizing one of the following esters or mixtures thereof: (i) acrylic esters having active hydrogen such as 2-hydroxyethyl acrylate, 2-hydroxypropyl acrylate, and 2-hydroxybutyl acrylate; methacrylic esters having the active hydrogen such as 2-hydroxyethyl methacrylate, 2-hydroxypropyl methacrylate, and 2-hydroxybutyl methacrylate; and methacrylic acid and acrylic acid having polyvalent active hydrogen such as an acrylic acid monoester of glycerin, a methacrylic acid monoester of glycerin, an acrylic acid monoester of trimethylolpropane, and a methacrylic acid monoester of trimethylolpropane with one of the following esters or mixtures thereof:
(ii) acrylic esters such as methyl acrylate, ethyl acrylate, isopropyl acrylate, n-butyl acrylate, and 2-ethylhexyl acrylate; methacrylic esters such as methyl methacrylate, ethyl methacrylate, isopropyl methacrylate, n-butyl methacrylate, isobutyl methacrylate, and n-hexyl methacrylate in the presence or absence of one of the following substances or mixtures selected from:
(iii) unsaturated carboxylic acid such as acrylic acid, methacrylic acid, and itaconic acid; unsaturated amide such as acrylic amide, N-methylolacrylamide; and a polymerizable monomer such as styrene, vinyl toluene, vinyl acetate, and acrylonitrile.

0022 As the urethane polyols, those having urethane bonds in a polymer generated by a polyaddition reaction between aromatic diisocyanate, aliphatic diisocyanate or alicyclic diisocyanate and an active hydrogen compound and having hydroxyl groups at side chains and terminals of the polymer. 0023 The polyol compound can be used singly or as a mixture of not less than two kinds. It is preferable that the polyol compound to be used in the present invention has 10 to 300 mgKOH/g in the hydroxyl value of a resin content.

0024 The isocyanate compound which reacts with the polyol compound to generate the polyurethane resin can be regarded as a hardening agent for the polyurethane resin when the polyol compound is contained in the medium as the main component.
As the isocyanate compound, it is preferable to use the aliphatic diisocyanate and/or the alicyclic diisocyanate or the multi-isocyanate (polyisocyanate) derived therefrom.
As the aliphatic and/or the alicyclic diisocyanates, 2,4-tolylene diisocyanate, 2,6-tolylene diisocyanate, 4,4'-diphenylmethane diisocyanate, m-phenylene diisocyanate, xylylene diisocyanate, tetramethylene diisocyanate, hexamethylene diisocyanate, 1,4-cyclohexylene diisocyanate, 4,4'-dicyclohexylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrhydronaphthalene diisocyanate, and isophorone diisocyanate are listed.
In addition, modified forms such as the isocyanurate body, the burette body, the adduct body, the allophanate body of the isocyanate compound are listed. The isocyanurate body of the hexamethylene diisocyanate is preferably used because it is excellent in the durability of surface treatment.

0025 It is preferable that the isocyanate group of the isocyanate compound is blocked (masked). By blocking the isocyanate group, it is possible to suppress the reactivity of the isocyanate compound having a high reactivity, which is difficult to manage its quality, prolong the pot life, and facilitate the quality management of the surface-treating liquid.
"The isocyanate group is blocked" means a state where the isocyanate group is in reaction with a compound capable of reversibly reacting with the isocyanate group, and the reactivity of the isocyanate group is inactivated. As a blocking agent for blocking the isocyanate group, phenols, ε-caprolactams, β-diketones, oximes, and the like are listed. The β-diketones, the oximes, and the ε-caprolactams are preferable because these blocking agents are excellent in allowing the balance between the quality stability of the treating liquid and the degree of dissociation to be favorable.

0026 To enhance workability in surface-treating liquid applying and hardening steps and perform uniform coating, the total amount of the polyol compound and the isocyanate compound contained in the surface-treating liquid is at favorably not less than 15 mass% nor more than 50 mass% and at more favorably not less than 20 mass% nor more than 40 mass%.
It is favorable that the polyurethane resin obtained by thermosetting the polyol compound and the isocyanate compound is contained in the total solid content obtained by hardening the surface-treating liquid at favorably not less than 80 mass% nor more than 99.9 mass%. The polyurethane resin is contained therein at more favorably not less than 92.0 mass% nor more than 99.0 mass%.

0027 As the solvent serving as the medium, it is possible to use various liquids which evaporate by heat treatment and the like and disperse the carbon nanotubes and are capable of dispersing and/or dissolving the multi-diisocyanate compound or the polyol compound and the isocyanate compound. It is possible to use various liquids such as water, alcohols, glycols, glycol esters, esters, ketones, and the like.

0028 It is preferable that the solvent in which water is contained as the main constituent element is used as the medium, because the solvent is unharmful for the human body and environment and suppresses the volatilization of an organic solvent to a higher extent than a method in which a large amount of the organic solvent is used and thus does not adversely affect a work environment and the global environment.
"Medium containing water as its main constituent element" means a solvent containing water as its main component at not less than 50 mass% nor more than 100 mass% in its entire mass. The solvent contains water at favorably not less than 60 mass% and more favorably not less than 80 mass%. As solvents other than water, esters, ketones, alcohols, glycols or glycol esters may be mixed with water. 0029 From the standpoint of ease of in uniformly dispersing the carbon nanotubes in the surface-treating liquid, it is preferable to prepare the surface-treating liquid of the first and second inventions in the following procedures (1) through (3).
(1) A carbon nanotubes-dispersed liquid is prepared by dispersing the carbon nanotubes in a medium not containing the multi-isocyanate compound or a medium which does not contain the polyol compound or the isocyanate compound.
(2) Separately from (1), a liquid containing the multi-isocyanate compound or the polyol compound and the isocyanate compound dispersed and/or dissolved in a medium is prepared.
(3) Thereafter (1) and (2) are mixed with each other. To add the carbon nanotubes to the medium not containing the multi-isocyanate compound as described in the above-described (1) is more advantageous than to directly add the carbon nanotubes to the medium containing the multi-isocyanate compound or the polyol compound and the isocyanate compound, because the former method allows uniform dispersion of the carbon nanotubes to be easier than the latter method.

0030 In the above-described (1), as a method of dispersing the carbon nanotubes in the medium in advance, an optimum method can be selected according to a medium to be used. It is possible to use the carbon nanotube surface-treated by oxidation treatment or add a surface-active agent to the medium.

0031 In the above-described (2), as a method of dispersing and/or dissolving the multi-diisocyanate compound or the polyol compound and the isocyanate compound in the medium, it is possible to appropriately select a method according to the kind of the medium and the degree of the multi-diisocyanate compound or the polyol compound and the isocyanate compound to be used. It is possible to use a method of introducing other functional groups having affinity for the medium to be used for the above-described compounds or a method of adding a surface-active agent such as a dispersant, a wetting agent or the like to the medium. 0032 In the case where the multi-isocyanate compound or the isocyanate compound is dispersed in the medium containing water as its main constituent element, it is preferable to use the above-described compounds into which the hydrophilic group has been introduced. By introducing the hydrophilic group into the above-described compounds, it is possible to make the above-described compounds water-soluble and disperse or/and dissolve the multi-isocyanate compound or the isocyanate compound in the medium in which water unharmful for the human body and environment is contained as the main constituent element.
Because the polyol compound contains a large number of hydroxyl groups which are the hydrophilic group, it is unnecessary to introduce the hydrophilic group thereinto in dispersing the polyol compound in the medium containing water as its main constituent element.

0033 The hydrophilic group can be appropriately introduced into the multi-isocyanate compound in a range in which the effect of suppressing the durability deterioration of the conductive member of the hydrophilic group is not inhibited. Specifically the hydrophilic group is introduced into the multi-isocyanate compound at a ratio of favorably 1 to 50 mass% and more favorably 3 to 30 mass%. Thereby it is possible to achieve a sufficient compatibility of the multi-isocyanate compound with water and the effect of suppressing the durability deterioration of the conductive member.
As the hydrophilic group, polyether, carboxylate, sulfonate, and the like are listed. Ammonium salts of carboxylic acid salts are preferable because they are excellent in stabilizing the surface-treating liquid.

0034 In addition to the above-described substances, so long as the effect of the present invention is not inhibited, the surface-treating liquid may contain a conductive agent (for example, conductive carbon black, weakly conductive carbon black, and the like) other than the carbon nanotube and resin other than the multi-diisocyanate compound or the polyol compound and the isocyanate compound.

0035 The surface-treating liquid for the conductive member prevents the durability thereof from being deteriorated by being applied to various conductive members such as a conductive roller, a conductive belt, and the like to be mounted on an image-forming apparatus and is capable of forming a coating layer which is conductive and capable of decreasing the degree of the dependence of the electrical resistance value on a voltage and the degree of the electrical resistance variation.
The surface-treating liquid can be used for conductive members made of various materials and preferably used for the conductive elastic layer of the conductive member formed with an elastic material.

0036 The present invention provides a method for treating a surface of a conductive elastic layer, wherein after a surface-treating liquid described above is applied to an oute.r surface of the conductive elastic layer formed by using not less than one kind of an elastic material selected from a group consisting of a rubber, a resin, and a thermoplastic elastomer, hardening heat treatment is performed to form a coating layer.

0037 Because the above-described surface-treating method facilitates processing, it is possible to perform treatment for preventing the durability of the conductive member from deteriorating. The surface-treating liquid containing the medium containing water as its main constituent element improves a work environment outstandingly and is excellent in the global environmental protection.

0038 As a method of applying the surface-treating liquid to the surface of the conductive elastic layer, it is possible to use known methods such as dipping, roll coating, knife coating, spray paint, and the like.

0039 In the case of the first invention, although the temperature at which the hardening heat treatment is performed depends on the kind of the multi-isocyanate compound, it is set to not less than 130°C nor more than 200°C and favorably not less than 140°C nor more than 170°C. The reason the temperature at which the hardening heat treatment is performed is set to the above-described range is because when the temperature is lower than 130°C, it is difficult to harden the multi-isocyanate compound and dissociate the blocking agent when the blocked multi-isocyanate compound is used. On the other hand, when the temperature is higher than 200°C, there is a fear that the conductive elastic layer deteriorates, which is unpreferable.

0040 As the period of time in which the hardening heat treatment is carried out, although the period of time in which the hardening heat treatment is carried out depends on the temperature of the hardening heat treatment, a period of time in which the surface-treating liquid sufficiently hardens and the conductive elastic layer does not deteriorate can be appropriately selected. Thus the period of time in which the hardening heat treatment is carried out is set to not less than 5 minutes nor more than 120 minutes and preferably not less than 10 minutes nor more than 60 minutes.

0041 When the blocked multi-isocyanate compound is used, it is preferable to perform humidification process after the heating process finishes because the period of time in which the blocking agent dissociates and the reaction period of time are necessary. The humidification process is performed to allow the non-reacted isocyanate group and water to react with each other by storing the surface-treating liquid at a proper temperature and humidity. As conditions, it is preferable to store the surface-treating liquid at a temperature of 50 to 80°C, a humidity of 30 to 90%, and a period of time of 2 to 4 hours and preferably about three hours.

0042 In the case of the second invention, although the temperature at which the hardening heat treatment is performed depends on the kind of the polyol compound and the isocyanate compound, it is set to not less than 110°C nor more than 200°C and favorably not less than 120°C nor more than 170°C. The reason the temperature at which the hardening heat treatment is performed is set to the above-described range is because when the temperature is lower than 110°C, it is difficult to harden the polyol compound and the isocyanate compound and dissociate the blocking agent when the blocked isocyanate compound is used. On the other hand, when the temperature is higher than 200°C, there is a fear that the conductive elastic layer deteriorates, which is unpreferable.
As the period of time in which the hardening heat treatment is performed, although the period of time in which the hardening heat treatment is performed depends on the temperature of the hardening heat treatment, a period of time in which the surface-treating liquid sufficiently hardens and the conductive elastic layer does not deteriorate can be appropriately selected. Thus the period of time in which the hardening heat treatment is carried out is set to not less than 5 minutes nor more than 120 minutes and preferably not less than 10 minutes nor more than 60 minutes.

0043 The third invention provides a conductive member comprising a conductive elastic layer formed by using not less than one kind of an elastic material selected from a group consisting of a rubber, a resin, and a thermoplastic elastomer and a coating layer covering a surface of the conductive elastic layer, wherein the coating layer is formed with the surface-treating liquid of the first invention, and the carbon nanotubes are dispersed in the hardened multi-isocyanate compound.

0044 In the coating layer of the conductive member, the carbon nanotubes are dispersed in the hardened multi-isocyanate compound to impart conductivity to the coating layer by the carbon nanotubes. Therefore the coating layer is capable of decreasing the degree of the dependence of the electrical resistance value on a voltage and the degree of the electrical resistance variation, as compared with a case where conductivity is imparted to the coating layer by carbon black. In addition the conductive agent does not bleed unlike a case where the composition of the coating layer contains an ionic conductivity imparting agent. Thereby neither sticking of the conductive member to a photosensitive drum nor deterioration of an image quality occurs. Therefore the conductive member of the present invention prevents the durability deterioration and maintains good and uniform charging characteristic and storage performance. Thereby the conductive member allows a preferable image quality to be provided for a long period of time and can be preferably used as a conductive roller such as a developing roller, a charging roller, a transfer roller, and the like to be mounted on an image-forming apparatus such as a color copying machine, a color printer, and the like.
The coating layer of the conductive member can be also formed by using a method other than the above-described surface-treating method.

0045 The fourth invention provides a conductive member comprising a conductive elastic layer formed by using not less than one kind of an elastic material selected from a group consisting of a rubber, a resin, and a thermoplastic elastomer and a coating layer covering a surface of the conductive elastic layer, in which the coating layer is formed with the surface-treating liquid of the second invention, and the carbon nanotubes are dispersed in polyurethane resin obtained by thermosetting the polyol compound and the isocyanate compound.

0046 In the coating layer of the conductive member, the carbon nanotubes are dispersed in the polyurethane resin obtained by the reaction between the polyol compound and the isocyanate compound to impart conductivity to the coating layer by the carbon nanotubes. Therefore the coating layer is capable of decreasing the degree of the dependence of the electrical resistance value on a voltage and the degree of the electrical resistance variation, as compared with a case where conductivity is imparted to the coating layer by carbon black. In addition the conductive agent does not bleed unlike a case where the composition of the coating layer contains an ionic conductivity imparting agent. Thereby neither sticking of the conductive member to a photosensitive drum nor deterioration of an image quality occurs. Therefore the conductive member of the present invention prevents the durability deterioration and maintains good and uniform charging characteristic and storage performance. Thereby the conductive member allows a preferable image quality to be provided for a long period of time and can be preferably used as a conductive roller such as a developing roller, a charging roller, a transfer roller, and the like to be mounted on an image-forming apparatus such as a color copying machine, a color printer, and the like.
The coating layer of the conductive member can be also formed by methods other than the above-described surface-treating method.

0047 The carbon nanotube is contained in the coating layer of the conductive member of the third and fourth inventions at a ratio of not less than 0.5 mass% nor more than 5.0 mass% and favorably at a ratio of not less than 1.0 mass% nor more than 3.0 mass%.
In the conductive member, the thickness of the coating layer is not less than 1µm nor more than 50µm and favorably not less than 5µm nor more than 30µm. The reason the thickness of the coating layer is set to the above-described range is because when the thickness of the coating layer is thinner than 1µm, the coating layer has a low durability, whereas when the thickness of the coating layer is thicker than 50µm, the coating layer may crack.

0048 The conductive elastic layer, of the conductive member, which forms the base material on which the coating layer is formed is formed with not less than one kind of an elastic material such as rubber, resin, and a thermoplastic elastomer. In addition the material for the conductive elastic layer is not limited to specific ones, but the conductive elastic layer can be formed by using components listed below.

0049 As elastic materials composing the conductive elastic layer, it is possible to use rubber such as ethylenepropylene-diene rubber (EPDM), butyl rubber (IIR), halogenated butyl rubber (X-IIR), acrylonitrile butadiene rubber (NBR), acrylic rubber, a brominated isobutylene-p-methylstyrene copolymer (BIMS) obtained by brominating isobutylene and p-methylstyrene, fluoro-rubber, silicone rubber, chloroprene rubber (CR), natural rubber (NR), butadiene rubber (BR), styrene-butadiene rubber (SBR), isoprene rubber (IR), ethylene propylene rubber, hydrogenated nitrile rubber (HNBR), and chlorosulfonated polyethylene rubber;
thermoplastic elastomer such as a styrene thermoplastic elastomer, a polyester thermoplastic elastomer, an amide thermoplastic elastomer, an olefin thermoplastic elastomer; and
resin such as olefin resin including polyethylene, polypropylene, ethylene-ethyl acrylate resin, ethylene-vinyl acetate resin, ethylene-methacrylic acid resin, ionomer resin, and chlorinated polyethylene. It is possible to use these rubbers and resins singly or in combination of not less than two kinds.
It is preferable that the elastic material is composed of a thermoplastic elastomer composition containing rubber such as EPDM, NBR, styrene thermoplastic elastomer, and olefin resin because such an elastic material has rubberlike elasticity and flexibility and resin-like moldability and recycling efficiency and in addition excellent mechanical properties and finish when they are processed. 0050 To impart conductivity to the conductive elastic layer, it is possible to use an ionic conductivity imparting agent such as metal salts; metal oxides such as carbon black, tin oxide, titanium oxide, graphite, and the like; or a conductive filler such as metal powder of conductive silica, copper, nickel, aluminum, and the like for the conductive elastic layer.
As the isocyanate compound, it is possible to preferably use an ethylene oxide-propylene oxide copolymer or/and an ethylene oxide-propylene oxide-allylglycidylether copolymer containing a metal salt.

0051 To improve the mechanical strength of the conductive elastic layer, it is possible to use a filler such as calcium carbonate, silica, clay, talc, barium sulfate, diatomaceous earth and the like for the conductive elastic layer in addition to the above-described conductive fillers.
A softener such as fatty acid such as stearic acid, lauric acid; and cottonseed oil, tall oil, an asphalt substance, paraffin wax may be used for the conductive elastic layer so long as the additive or the like does not liberates, bleeds, and blooms on the surface of the conductive elastic layer nor migrates to members such as a photoreceptor which contact the conductive member so that a photoreceptor is not polluted. Thereby it is possible to appropriately adjust the hardness and flexibility of the conductive elastic layer.
It is possible to use various additives such as a vulcanizing agent, a vulcanization accelerator, a foaming agent, an age resistor, a plasticizer for the conductive elastic layer as necessary. As the vulcanizing agent, it is possible to use sulfur, sulfur-containing organic compounds, peroxides, resin crosslinking agents, and the like.

0052 The conductive elastic layer of the conductive roller can be formed by using a known method. For example, it is possible to use a method of supplying components composing an elastic material such as a rubber component containing an additive such as a conductive agent, a thermoplastic elastomer component, a resin component, and the like to a rubber-kneading apparatus such as an open roll, a Banbury mixer or a kneader at a necessary mixing ratio and in a mixing order, kneading the components to obtain a kneaded material, tubularly preforming the kneaded material with a uniaxial extruder, vulcanizing (crosslinking) the preform, inserting a core into the vulcanized preform, abrading the surface of the preform, and cutting the abraded preform to a required dimension to thereby obtain a conductive elastic layer. The kneaded material can be vulcanized (crosslinked) by using a technique such as dynamic crosslinking as necessary.

0053 The thickness of the conductive elastic layer is set to not less than 1mm nor more than 10mm and preferably not less than 1.5mm nor more than 6mm. The reason the thickness of the conductive elastic layer is set to the above-described range is because when the thickness of the conductive elastic layer is thinner than 1mm, it is difficult to obtain a sufficient charging property. On the other hand, when the thickness of the conductive elastic layer is thicker than 10mm, the conductive elastic layer is insufficiently charged and the conductive member is so large that the conductive member is unsuitable for miniaturization and weight reduction.

0054 The electrical resistance value of the conductive member including the coating layer and the conductive elastic layer is set to not less than 10⁴Ω nor more than 10¹Ω and favorably not less than 10⁵Ω nor more than 10⁸Ω. The reason the electrical resistance value of the conductive member is set to the above-described range is because when the electrical resistance value thereof is smaller than 10⁹Ω,it is difficult to obtain the conductive member having the electrical resistance value smaller than 10⁴Ω, whereas when the electrical resistance value thereof is larger than 10¹⁰Ω, efficiency in transfer, charging, tonner supply, and the like deteriorates and hence there occurs a problem that the conductive member is unsuitable for practical use. The electrical resistance value of the conductive member is measured by using the method described in the examples of the present invention in which the conductive member is roll-shaped.

### EFFECT OF THE INVENTION

0055 In the conductive member of the first and second inventions, the carbon nanotubes are dispersed in the medium in which the multi-diisocyanate compound or the polyol compound and the isocyanate compound are dispersed and/or dissolved. Therefore it is possible to form on the conductive member the coating layer which keeps the conductivity of the conductive member in a proper range, effectively prevents the deterioration of the durability thereof, is capable of decreasing the degree of the dependence of the electrical resistance value on a voltage and the degree of the variation in the electrical resistance, and allows a fine printed image quality to be obtained over a long period of time. In addition the conductive agent does not bleed from the coating layer formed with the surface-treating liquid of the present invention unlike the case where the ionic conductivity imparting agent is used for the coating layer. Thereby even though the coating layer contacts other members such as the photoreceptor for a long time, neither sticking of the coating layer thereto nor deterioration of an image quality occurs.

0056 The conductive member of each of the third and fourth inventions has the conductive elastic layer formed by using not less than one kind of the elastic material selected from the group consisting of the rubber, the resin, and the thermoplastic elastomer and the coating layer in which the carbon nanotubes are dispersed in the hardened multi-isocyanate compound or in the polyurethane resin obtained by thermosetting the polyol compound and the isocyanate compound.
Therefore without inhibiting the conductivity of the conductive elastic layer, the coating layer keeps the electrical resistance value of the conductive member in a proper range, decreases the degree of the dependence of the electrical resistance value thereof on a voltage and the degree of the variation in the electrical resistance thereof, and is capable of preventing the deterioration of the durability thereof. In addition because the conductive agent does not bleed from the coating layer, the conductive member is excellent in its storage performance and allows fine printed images to be obtained for a long time.

0057 The method of the present invention of surface-treating the conductive member is capable of improving the degree of the deterioration of the durability of the conductive member such as the conductive roller. By using the medium containing water as its main constituent element, the surface-treating method suppresses the volatilization of an organic solvent to a higher extent than the conventional method in which a large amount of the organic solvent is used. Therefore the surface-treating method conspicuously improves a work environment and is excellent in the global environmental protection.

### BRIEF DESCRIPTION OF THE DRAWINGS

Fig. 1 shows a conductive roller of an embodiment of the present invention to be used as a paper-feeding roller, in which Fig. 1(A) is a schematic perspective view and Fig. 1(B) is a sectional construction view.
Fig. 2 is a schematic view of an apparatus for measuring the electrical resistance value of the conductive roller.
Fig. 3 is an explanatory view for explaining a printer used in a paper-feeding durability test and a storage test conducted for the conductive roller.

### EXPLANATION OF REFERENCE NUMERALS AND SYMBOLS

10: conductive roller to be used as a paper-feeding roller
11: conductive elastic layer
12: core (shaft)
13: coating layer
14: roller part
15: aluminum drum
16: power source

### BEST MODE FOR CARRYING OUT THE INVENTION

0060 Embodiment of the present invention is described below with reference to the drawings.

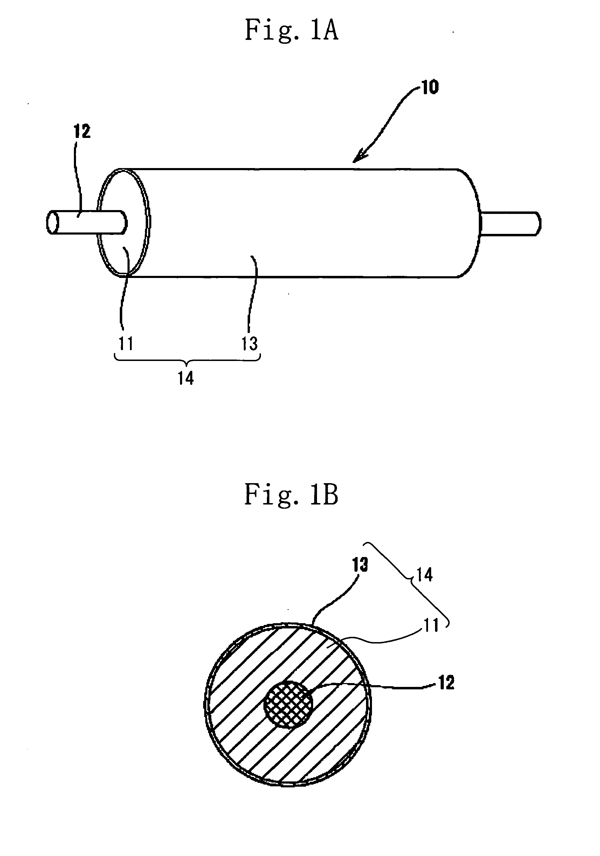

Fig. 1 shows a conductive roller 10 of a first embodiment of the present invention to be used as a paper-feeding roller.
In the conductive roller 10, a columnar core (shaft) 12 is inserted by press fit into a hollow portion of a cylindrical conductive elastic layer 11 formed by molding a conductive thermoplastic elastomer composition to form a roller portion 14 having a coating layer 13 on a surface of the conductive elastic layer 11.

0061 In the coating layer 13 of the conductive roller 10 of the first embodiment, carbon nanotubes are uniformly dispersed in a hardened multi-isocyanate compound.
The coating layer 13 is formed by applying a surface-treating liquid in which the carbon nanotubes are dispersed in a medium in which the multi-isocyanate compound is dispersed and/or dissolved to the surface of the conductive elastic layer 11 and thereafter performing hardening heat treatment for the surface-treating liquid.

0062 The method of preparing the surface-treating liquid forming the coating layer 13 is described below.

### [Preparation of Surface-Treating Liquid]

The surface-treating liquid of the first embodiment is obtained by separately preparing a carbon nanotube-dispersed liquid (A) in which the carbon nanotubes are dispersed in water and a liquid (B) in which the multi-isocyanate compound is dispersed and/or dissolved in water and thereafter mixing both liquids with each other.

0063 As the carbon nanotube-dispersed liquid (A), a liquid in which multi-layer structure carbon nanotubes having diameters of 10 to 20nm and lengths of 0.1 to 10µm are dispersed in water at a concentration of 3 to 5 mass% is used. The carbon nanotubes in the carbon nanotube-dispersed liquid are used by making the surfaces thereof hydrophilic by adding a surface-active agent to the medium or by oxidizing the carbon nanotubes. Thereby the carbon nanotubes are uniformly dispersed in water.
The carbon nanotubes can be oxidized by performing plasma processing of powdery carbon nanotubes.

0064 As the carbon nanotube, it is possible to use those commercially available or those produced by using a method known in the field to which the present invention relates.
As methods of producing the carbon nanotube, an arc discharge method, a laser evaporation method, a vapor phase growth method, a catalytic hydrogen reduction method of carbon dioxide, a CVD method, a HiPco method of growing the carbon nanotube in a gas phase by allowing a reaction between carbon monoxide and an iron catalyst under a high temperature and a high pressure are listed. Of these methods, it is preferable to produce the carbon nanotube by using the vapor phase growth method or the CVD method.

0065 As the liquid (B) in which the multi-isocyanate compound is dispersed and/or dissolved in water, aliphatic diisocyanate and/or alicyclic diisocyanate into which a hydrophilic group such as polyether, carboxylate, sulfonate has been introduced are used as the multi-isocyanate compound and dispersed and/or dissolved in water.
As the aliphatic diisocyanate and/or the alicyclic diisocyanate, hexamethylene diisocyanate, tolylene diisocyanate, and the like are used. For example, it is possible to use a multi-diisocyanate-dispersed liquid in which an isocyanurate body of the hexamethylene diisocyanate into which an ammonium salt of carboxylic acid has been introduced is dispersed in water with a dispersant.

0066 The isocyanate group of the multi-isocyanate compound may be blocked with oximes, β-diketones or ε-caprolactams. The surface-treating liquid containing the multi-isocyanate compound in which the isocyanate group is blocked is capable of suppressing the reactivity of the isocyanate group. Thus the surface-treating liquid is excellent in its storage performance.

0067 Thereafter the carbon nanotube-dispersed liquid prepared previously and the carbon nanotube-dispersed liquid are mixed with each other to prepare the surface-treating liquid of the first embodiment.
The surface-treating liquid obtained in the above-described manner contains the carbon nanotube at not less than 0.3 mass% nor more than 1.2 mass% and the multi-isocyanate compound at not less than 20 mass% nor more than 40 mass%.
Although the surface-treating liquid is prepared in the above-described mixing order in the first embodiment, the mixing order is not limited to the above-described one, provided that the carbon nanotubes and the multi-isocyanate compound are uniformly present in the medium.

### [Description of Conductive Elastic Layer]

0068 The conductive elastic layer 11 of the first embodiment is described below.
A conductive thermoplastic elastomer composition forming the conductive elastic layer contains a base polymer (A) consisting of a thermoplastic elastomer composition in which EPDM is dispersed in a mixture of the olefin resin and the styrene thermoplastic elastomer by dynamically crosslinking the EPDM with a resin crosslinking agent; a component (B) consisting of an ion-conductive agent in which an EO-PO-AGE copolymer contains a metal salt consisting of metal cations and anions having fluoro groups and sulfonyl groups; a component (C) consisting of an ethylene-acrylic ester-maleic anhydride copolymer; and a component (D) consisting of a polyester thermoplastic elastomer. The EO-PO-AGE copolymer of the component (B) consisting of the ion-conductive agent may be dynamically crosslinked.

0069 In the conductive elastomer composition, as the mixing ratio between the styrene thermoplastic elastomer and the olefin resin, 30 to 50 parts by mass of the olefin resin is mixed with 100 parts by mass of the styrene thermoplastic elastomer. 100 to 400 parts by mass of the EPDM which is the crosslinkable rubber is added to 100 parts by mass of the mixture of the styrene thermoplastic elastomer and olefin resin. The mixing amount of the resin crosslinking agent is set to 5 to 15 parts by mass for 100 parts by mass of the EPDM.
The component (B) consisting of the ion-conductive agent is contained in the conductive thermoplastic elastomer composition at a ratio of 20 to 40% in a volume fraction. The mixing amount of the ion-conductive agent (B) is set to 3 to 25 parts by mass for 100 parts by mass of the base polymer (A). Supposing that the entire ion-conductive agent (B) is 100 parts by mass, the above-described metal salt is used at a ratio of 10 to 25 parts by mass. The mixing amount of the ethylene-acrylic ester-maleic anhydride copolymer (C) is set to 3 to 30 parts by mass for 100 parts by mass of the component (B) consisting of the ion-conductive agent, 0.5 to 5 parts by mass for 100 parts by mass of the component (A) consisting of the base polymer, and 10 to 40 parts by mass for 100 parts by mass of the component (D) consisting of the polyester thermoplastic elastomer.

0070 Besides the components (A) through (D), the conductive thermoplastic elastomer composition forming the conductive elastic layer 11 contains a softener, calcium carbonate, carbon black, and a foaming agent as desired.

0071 The conductive thermoplastic elastomer composition is produced by using a method described below.
Initially the EPDM is pelletized in advance. The pelletized EPDM, the styrene thermoplastic elastomer, the olefin resin, the crosslinking agent, and the softener were kneaded at a temperature of 200°C to prepare a pellet of the thermoplastic elastomer composition composing the base polymer (A).

0072 The pellet of the component (A) consisting of the thermoplastic elastomer composition, the component (B) consisting of the ion-conductive agent, the component (C) consisting of the ethylene-acrylic ester-maleic anhydride copolymer, and the component (D) consisting of the polyester thermoplastic elastomer, the calcium carbonate, and the carbon black are kneaded at a temperature of 200°C to obtain the pellet of the conductive thermoplastic elastomer composition.

0073 The pelletized conductive thermoplastic elastomer composition is tubularly extruded by using a uniaxial extruder in a condition of 180°C to 230°C. By inserting the metal core 12 into the hollow portion of the tubular preform by press fit or by bonding both to each other with an adhesive agent to fix both to each other, the conductive roller having the core 12 and the conductive elastic layer 11 is obtained.

0074 The conductive roller, not having the coating layer 13, which is produced by using the above-described method has an electrical resistance value of 10⁵Ω to 10⁸Ω at an applied voltage of 1000V. The thickness of the conductive elastic layer is set to not less than 1mm nor more than 6mm.

0075 The method of surface-treating the conductive elastic layer 11 with the surface-treating liquid, namely, the method of forming the coating layer 13 is described below.

### [Method of Forming Coating Layer]

0076 The surface-treating liquid is applied to the surface of the conductive elastic layer 11 by dipping a conductive roller having a core 12 and a conductive elastic layer 11 disposed on the periphery thereof in a dipping bath in which the surface-treating liquid prepared by using the above-described method was put and thereafter raising the conductive roller at 5mm/second.
Thereafter the conductive roller to which the surface-treating liquid has been applied is heated for 15 to 60 minutes inside an oven where the temperature is set to not less than 130°C nor more than 200°C to heat and harden the multi-isocyanate compound in the surface-treating liquid. In this manner, the coating layer 13 is formed on the peripheral surface of the conductive elastic layer 11.
In the case where the blocked multi-isocyanate compound is used for the surface-treating liquid, after the hardening heat treatment is performed, the surface-treating liquid is humidified for 2 to 4 hours in environment where temperature is 70 to 90°C and humidity is 25 to 50%. By performing humidification process, isocyanate groups which remain non-reacted because of blocking are allowed to react with water to inactivate them.

0077 The coating layer 13 obtained in this manner contains not less than 1.0 mass% nor more than 3.0 mass% of the carbon nanotube and not less than 92.0 mass% nor more than 99.0 mass% of the hardened multi-isocyanate compound.
The thickness of the coating layer 13 is not less than 5µm nor more than 30µm.

0078 Because the carbon nanotubes are uniformly dispersed in the coating layer 13 of the conductive roller 10 of the first embodiment formed in the above-described manner, the coating layer 13 is excellent in its conductivity, has a very low degree of dependence on a voltage in its electrical resistance and a very low degree of variation in its electrical resistance, and further prevents the conductive agent from bleeding. In addition because the coating layer 13 contains the hardened multi-isocyanate compound as its matrix, the coating layer 13 can be restrained from deteriorating in its durability and allows clear images to be provided over a long period of time.
Because water is used as the solvent in the surface-treating method, the surface-treating method improves the work environment conspicuously and the conductive roller 10 produced by the surface-treating method is environmentally friendly.

0079 Examples of the first embodiment and comparison examples are described in detail below.

### (Examples 1 through 6, Comparison Examples 1 through 4)

### [Preparation of Conductive Roller Having Conductive Elastic Layer]

0080 By using a conductive thermoplastic elastomer compositions each containing the components at the mixing ratios shown in table 1, tubular extruded materials were prepared. A core (shaft) was inserted into each of the tubular extruded materials to prepare conductive rollers each having a conductive elastic layer used as a base material on which a coating layer was formed.

**Table 1**

| Component | | Mixing amount (part by mass) |
|---|---|---|
| (A) | EPDM | 100 |
| | SEEPS | 24.69 |
| | PP | 10 |
| | Crosslinking agent | 12 |
| | Softener | 174 |
| | Calcium carbonate | 30 |
| | Carbon black | 10 |
| (C) | Compatibilizing agent | 6 |
| (B) | Conductive agent | 60 |
| (D) | TPEE | 50 |

0082 The conductive rollers were produced by a method described below.
As the base polymer (A), the thermoplastic elastomer composition in which the EPDM was dispersed in the mixture of the styrene thermoplastic elastomer (SEEPS) and the polypropylene resin (PP) by dynamically crosslinking the EPDM was used.
Initially the EPDM was pelletized in advance. The pelletized EPDM, the styrene thermoplastic elastomer (SEEPS), the polypropylene resin (PP), the crosslinking agent, the softener were used at the ratio shown in table 1. After the above-described components were dry-blended with a tumbler, they were kneaded by using a twin screw extruder ("HTM38" produced by Ibeck Inc.) at a speed of 200 rpm and a temperature of 200°C to prepare a pellet of each thermoplastic elastomer composition.

0083 The pellet of the obtained thermoplastic elastomer composition, the calcium carbonate, the carbon black, the ethylene-acrylic ester-maleic anhydride copolymer (C) which is the compatibilizing agent, the ion-conductive agent (B), the polyester thermoplastic elastomer (TPEE)(D) were used at the ratio shown in table 1. After the above-described components were dry-blended with the tumbler, they were kneaded by using the twin screw extruder ("HTM38" produced by Ibeck Inc.) at a speed of 200 rpm and a temperature of 200°C to obtain a pellet of each conductive thermoplastic elastomer composition.

0084 The pellet of each conductive thermoplastic elastomer composition was tubularly extruded by using a uniaxial extruder (φ50 extruder produced by San NT) at a speed of 20 rpm and a temperature of 200°C to obtain an extruded material having an outer diameter of 12mm and an inner diameter of 5mm.
After a core having a diameter of 6mm was inserted into a hollow portion of the obtained tube, the tube was ground and cut to obtain the conductive roller having an outer diameter of 12mm.
Before the surface of the conductive roller having the conductive elastic layer was surface-treated, the electrical resistance value of the conductive roller measured by a method described later was 1 × 10⁶Ω at an applied voltage of 500V.

### 0085 Materials used are as shown below.

As the EPDM, 100% oil-extended EPDM was used. The mixing amount of the extended oil of the oil-extended EPDM is reckoned in the mixing amount of the softener in table 1, and only the mixing amount of the rubber component is shown in the column of the EPDM. That is, as shown in table 1, the mixing amount of the EPDM is 100 parts by mass, and the degree of the softener is 174 parts by mass. Therefore of 174 parts by mass of the softener, the mixing amount of the extended oil derived from the oil-extended EPDM is 100 parts by mass, and the remaining 74 parts by mass is the mixing amount of the commercially available softener shown below.
■ EPDM: "Esprene 670F (commercial name)" (100% extended paraffin oil) produced by Sumitomo Chemical Co., Ltd.
■ SEEPS: Hydrogenated styrene thermoplastic elastomer "SEPTON4077 (commercial name)" produced by Kuraray Co., Ltd.
■ PP: Polypropylene resin "Novatec PP (commercial name)" produced by Japan Polychem Co.
■ Cross linking agent: Halogenated alkylphenol resin crosslinking agent "TACKROL250-III (commercial name)" produced by Taoka Chemical Co., Ltd.
■ Softener: Paraffin oil "Diana Process Oil PW-380 (commercial name)" produced by Idemitsu Kosan Co., Ltd.
■ Calcium carbonate: "BF300 (commercial name)" produced by Shiraishi Calcium Co., Ltd.
■ Carbon black: "SEAST3 (commercial name)" produced by Tokai Carbon Co., Ltd.
■ Compatibilizing agent: Ethylene-acrylic ester-maleic anhydride copolymer "BONDINE LX4110 (commercial name)" produced by Arkema Inc.
■ Conductive agent: EO-PO-AGE copolymer "ZSN8030 (commercial name)" produced by Zeon Corporation: lithium trifluoromethanesulfonate (produced by Sanko Chemical Industory Co., Ltd.) = 9:1(mass ratio)
■ TPEE: Polyester thermoplastic elastomer "Hytre13078 (commercial name)" produced by DU PONT-TORAY CO., LTD. 0086 The surface-treating liquids of the examples and the comparison examples were prepared at the ratios shown in tables 2 and 3.

**Table 2**

| | Solid content | Example1 | Example2 | Example3 | Example4 | Example5 | Example6 |
|---|---|---|---|---|---|---|---|
| Main component1 | 100.0% | 100 | | | | | |
| Main component2 | 80.0% | | 100 | 100 | | | |
| Main component3 | 44.0% | | | | 100 | 100 | 100 |
| Additive1 | 1.5% | 3.4 | | | 1.5 | 1.5 | |
| Additive2 | 3.0% | 6.8 | | | 3 | 3 | |
| Additive3 | 1.5% | 3.4 | | | 1.5 | 1.5 | |
| Water | 0% | 178.3 | 66.7 | 66.7 | | | |
| CNT-dispersed liquid1 | 5.0% | 54.5 | 43.6 | | 24 | 10 | |
| CNT-dispersed liquid2 | 3.0% | | | 72.7 | | | 40 |
| Conductive carbon-dispersed liquid | 16.5% | | | | | 15 | |
| Ionic conductivity imparting agent | 100.0% | | | | | | |
| Treatment condition | Heat hardening condition (temperature, time period) | 150°C,1hr | 150°C, 1hr | 150°C, 1hr | 150°C, 1hr | 150°C, 1hr | 150°C, 1hr |
| | Humidification condition (temperature, humidity, time period) | | 80°C, 30%, 3hr | 80°C, 30%, 3hr | | | |
| Electrical resistance value of roller (initial value) | Electrical resistance of roller at 100V | 5.9 | 5.8 | 5.8 | 5.8 | 6.0 | 5.7 |
| | Electrical resistance variation at 100V | 1.1 | 1.2 | 1.1 | 1.2 | 1.4 | 1.2 |
| | Electrical resistance of roller at 500V | 5.8 | 5.7 | 5.8 | 5.6 | 5.5 | 5.6 |
| | Electrical resistance variation at 500V | 1.1 | 1.1 | 1.1 | 1.2 | 1.2 | 1.1 |
| | Difference between electrical resistances at voltages 100V and 500V | 0.1 | 0.1 | 0 | 0.2 | 0.5 | 0.1 |
| Electrical resistance value of roller (after paper-feeding durability test finished) | Electrical resistance of roller at 100V | 6.9 | 6.8 | 6.7 | 6.8 | 6.9 | 6.7 |
| | Electrical resistance variation at 100V | 1.3 | 1.4 | 1.3 | 1.4 | 1.5 | 1.3 |
| | Electrical resistance of roller at 500V | 6.0 | 5.9 | 6.1 | 6.0 | 6.0 | 5.9 |
| | Electrical resistance variation at 500V | 1.1 | 1.1 | 1.2 | 1.2 | 1.2 | 1.1 |
| | Difference between electrical resistances at voltages 100V and 500V | 0.9 | 0.9 | 0.6 | 0.8 | 0.9 | 0.8 |
| Image after paper-feeding durability test finished | | Good | Good | Good | Good | Good | Good |
| After storage test finished | Sticking to photoreceptor | Did not occur | Did not occur | Did not occur | Did not occur | Did not occur | Did not occur |
| | Image | Good | Good | Good | Good | Good | Good |

**Table 3**

| | Solid content | Comprison Example1 | Comprison Example2 | Comprison Example3 | Comprison Example4 |
|---|---|---|---|---|---|
| Main component1 | 100.0% | 100 | | | |
| Main component2 | 80.0% | | 100 | 100 | |
| Main component3 | 44.0% | | | | 100 |
| Additive1 | 1.5% | 3.4 | 2.7 | 2.7 | 1.5 |
| Additive2 | 3.0% | 6.8 | 5.5 | 5.5 | 3 |
| Additive3 | 1.5% | 3.4 | 2.7 | 2.7 | 1.5 |
| Water | 0% | 178.3 | 66.7 | 66.7 | |
| CNT-diapersed liquid1 | 5.0% | | | | |
| CNT-diapersed liquid2 | 3.0% | | | | |
| Conductive carbon-dispersed liquid | 16.5% | 54.5 | 43.6 | | 43.6 |
| Ionic conductivity imparting agent | 100.0% | | | 19.2 | |
| Treatment condition | Heat hardening condition (temperature, time period) | 150°C, 1hr | 150°C, 1hr | 150°C, 1hr | 150°C,1hr |
| | Humidification condition (temperature, humidity, time period) | | 80°C, 30%, 3hr | 80°C, 30%, 3hr | |
| Electrical resistance value of roller (initial value) | Electrical resistance of roller at 100V | 8.3 | 8.3 | 7.0 | 8.4 |
| | Electrical resistance variation at 100V | 6.3 | 6.0 | 1.5 | 6.5 |
| | Electrical resistance of roller at SOOV | 6.2 | 6.1 | 6.1 | 6.0 |
| | Electrical resistance variation at 500V | 1.1 | 1.1 | 1.2 | 1.2 |
| | Difference between electrical resistances at voltages 100V and 500V | 2.1 | 2.2 | 0.9 | 2.4 |
| Electrical resistance value of roller (after paper-feeding durability test finished) | Electrical resistance of roller at 100V | 9.3 | 9.2 | 7.6 | 8.8 |
| | Electrical resistance variation at 100V | 5.0 | 4.6 | 2.0 | 5.1 |
| | Electrical resistance of roller at 500V | 7.4 | 7.2 | 6.4 | 7.0 |
| | Electrical resistance variation at 500V | 1.1 | 1.1 | 1.2 | 1.2 |
| | Difference between electrical resistances at voltages 100V | 1.9 | 2.0 | 1.2 | 1.8 |
| Image after paper-feeding durability test finished | | Many white spots generated by typographic error | Many white spots generated by typographic error | Good | Many white spots generated by typographic error |
| After storage test finished | Sticking to photoreceptor | Did not occur | Did not occur | Occurred | Did not occur |
| | Image | Fogged | Fogged | Lateral stripe | Fogged |

### [Preparation of Surface-Treating Agent]

### (Examples 1 through 6)

0089 As the carbon nanotube-dispersed liquids (CNT-dispersed liquids), commercially available products, shown below, in which carbon nanotubes were dispersed in water in advance were used.
In mixing a main component containing the multi-isocyanate compound and water with each other, after water and the main component were mixed with each other, the additive was added to the mixture of the main component and the water. After he CNT-dispersed liquid was added to the mixture, all the components were stirred and mixed with one another with a stirrer to prepare the surface-treating liquids.

### (Comparison Examples 1 through 4)

In the comparison examples 1, 2, and 4, instead of the CNT-dispersed liquid, a conductive carbon-dispersed liquid was used to prepare surface-treating liquids. In the comparison example 3, instead of the CNT-dispersed liquid, the ionic conductivity imparting agent was used to prepare a surface-treating liquid.

0090 As the components shown in table 2, 3, the following products were used.
■Main component 1: Isocyanate (isocyanurate body of hydrophilic group-containing hexamethylene diisocyanate, unblocked), ("Bayhydur3100 (commercial name)" produced by Sumika Bayer Urethane Co., Ltd.)
■Main component 2: Blocked isocyanate "AQB102 (commercial name)" produced by Japan Polyurethane Industry Co., Ltd. main component 3: Blocked isocyanate (hydrophilic group-containing tolylene diisocyanurate blocked with oxime), "TAKENATE WB-700 (commercial name)" produced by Mitsui Chemicals, Inc.
■Additive 1 (wetting agent): "POLYFLOW KL-510 (commercial name)" produced by KYOEISHA CHEMICAL CO., LTD.
■Additive 2 (antifoam): "SURFYNOL104E (commercial name)" obtained by NISSIN CHEMICAL INDUSTRY CO., LTD.
■Additive 3 (dispersant): "PELEX OT-P (commercial name)" produced by Kao Corporation
■Water: Purified water
■Carbon nanotube (CNT) dispersed liquid 1: "CNF-T/water 5% dispersed liquid" produced by Mitsubishi Materials Electronic Chemicals Co., Ltd. (oxidized type, 5 mass% of carbon nanotube is contained, dispersion solvent: water is contained as its main constituent element, volume resistivity of contained carbon nanotube powder; 4.0 × 10⁻⁼²Ω·cm, diameter; 10 to 20mm, length; 0.1 to 10µm)
■Carbon nanotube (CNT) dispersed liquid 2: "CNF-T/water 3% dispersed liquid" produced by Mitsubishi Materials Electronic Chemicals Co., Ltd. (surface-active agent is used, 3 mass% of carbon nanotube is contained, dispersion solvent: water is contained as its main constituent element, volume resistivity of contained carbon nanotube powder; 4.0 × 10⁻²Ω·cm, diameter; 10 to 20mm, length; 0.1 to 10µm)
■Conductive carbon-dispersed liquid: "LION PASTE W-311N (commercial name)" (16.6 mass% of carbon black is dispersed) produced by Lion Corporation
■ Ionic conductivity imparting agent: "PEL-20A (commercial name)" produced by Japan Carlit Co., Ltd.

0091 After the surface-treating liquid containing the components at the ratio shown in tables 2, 3 was applied to the outer surface of the conductive elastic layer of the prepared conductive roller by means of dipping, hardening heat treatment and humidification treatment were performed in the treatment conditions shown in tables 2, 3. In this manner, conductive rollers of the examples and comparison examples were prepared.
The thickness of the coating layer of the obtained conductive roller was 10 to 20µm.
The heat treatment was carried out in an oven in which temperature was set to 150°C. The humidification treatment was performed by leaving the conductive roller in a constant temperature and humidity room in which temperature and humidity were set to those shown in tables 2, 3.

0092 The following tests were conducted on the obtained conductive rollers of the examples and the comparison examples. Results are shown in tables 2, 3.

### (Initial Electrical Resistance Value of Roller and Variation in Electrical Resistance)

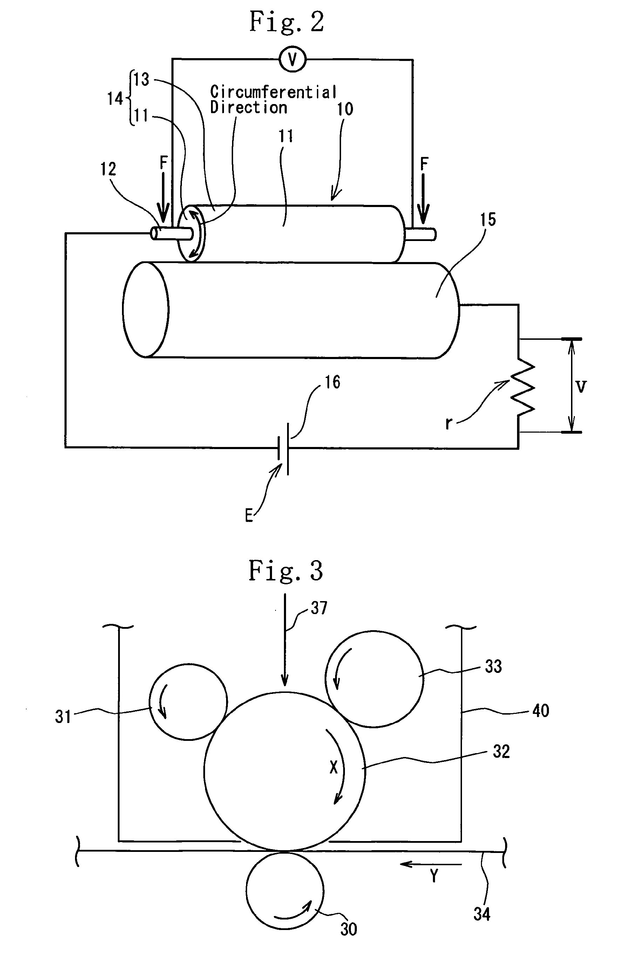

0093 As Shown in Fig.2, in an atmosphere having a temperature of 23°C and a relative humidity of 55%, a roller part 14 of the conductive roller 10 having a core 12 inserted therethrough was mounted on an aluminum drum 15 having φ 30mm, with the conductive roller 10 in contact with the aluminum drum 15. The leading end of a conductor, having an internal resistance of r (100Ω to 10kΩ), which was connected to the positive side of a power source 16 was connected to one end surface of the aluminum drum 15. The leading end of a conductor connected to the negative side of the power source 16 was connected to one end surface of the core 12. A load of 450g was applied to both ends of the core 12. The conductive roller 10 was indirectly rotated at a speed of 40 rpm by rotating the aluminum drum 15, with a voltage of 100V or 500V being applied between the core 12 and the aluminum drum 15. After the electrical resistance was measured 36 times in the circumferential direction of the conductive roller 10, an average value was computed and a resistance variation was found from the difference between a maximum value and a minimum value. The value of the internal resistance was so adjusted that significant digits of a measured value was as large as possible, according to a level of the electrical resistance value of the conductive roller 10.
Supposing that a voltage applied to the apparatus is E, the electrical resistance value R of the conductive roller 10 is: R=r×E/(V-r). Because the term of (-r) is regarded as being slight, R=rxE/V. The electrical resistance value R of the roller 10 was computed from a detected voltage V applied to the internal resistance r. Tables show the average value of the electrical resistance value of each conductive roller 10 by common logarithm (log₁₀R).
The difference (roller resistance at 100V - roller resistance at 500V) between the roller resistance at 100V and the roller resistance at 500V was found.

0094 It is especially preferable that the resistance value of the roller at 100V and 500V fall in a range not less than 10⁵Ω nor more than 10⁸Ω.
The smaller is resistance variation in the resistance value of the roller, the better. When the resistance variation in the resistance value thereof at 100V and 500V is not more than 1.5, there is no problem.
The smaller is the difference between the roller resistance at 100V and the roller resistance at 500V, the better. When the difference is not more than 1.0, there is no problem.

### (Paper-feeding durability test)

0095 A charging roller 31 inside a toner cartridge 40 attached to a commercially available printer ("C5900dn (commercial name) produced by Oki Electric Industry Co., Ltd.) having a construction shown in Fig. 3 was replaced with the conductive rollers of the examples and the comparison examples to conduct a print (image formation) test by feeding 20000 sheets of paper into the printer in a condition in which the temperature was 23°C and the relative humidity was 55%.
In a way similar to that used to measure the initial electrical resistance of the conductive roller and the electrical resistance variation thereof, the electrical resistance and the electrical resistance variation thereof (100V, 500V) were measured after the paper-feeding durability test finished.
The print density, print variation, white spot generated by typographic error, and sharpness of the image of a 20001th sheet printed after the image was printed on 20000th sheet of paper were visually checked.

0096 In the commercially available printer shown in Fig. 3, the charging roller 31, the photosensitive drum 32, and the developing roller 33 were incorporated inside the toner cartridge 40, whereas the transfer roller 30 was incorporated inside the printer. Printing is performed at the following steps.
The photosensitive drum 32 rotates in a direction shown with an arrow X and is charged by the charging roller 31. Thereafter a laser 37 exposes a non-image area of the photosensitive drum 32 to destaticize the non-image area, whereas a portion corresponding to a image area thereof is charged. Thereafter toner (not shown) supplied by the developing roller 33 attaches to the charged image area of the photosensitive drum 32 to form a toner image. Because an electric field is applied to the transfer roller 30, the toner image is transferred to paper 34 transported in a direction shown with an arrow Y.

### (Storage Test)

0097 Each of the conductive rollers of the examples and the comparison examples was incorporated inside the toner cartridge shown in Fig. 3 as a charging roller 31 and stored for 30 days at a temperature of 50°C and a humidity of 55%. After whether the charging roller 31 and the photosensitive drum 32 stuck to each other was observed, a print (image formation) test was conducted to visually observe the print density, print variation, white spot generated by typographic error, sharpness of obtained image-printed sheets of paper.

0098 As shown in tables 2, 3, each of the conductive rollers of the comparison examples 1, 2, and 4 containing the conductive carbon black as the conductive agent of the coating layer had a very large electrical resistance variation not less than 10^{4.6}Ω at an applied voltage of 100V both at the initial stage and after the paper-feeding durability test finished. Further each of the conductive rollers had a very large difference not less than 10^{1.8}Ω between the electrical resistance value thereof at an applied voltage of 100V and an electrical resistance value thereof at an applied voltage of 500V. The conductive rollers caused a large number of white spots to be generated in a printed image by typographic error after the paper-feeding durability test finished. In addition, images were fogged in a printing test conducted after the storage test finished. Thus clear printed images could not be obtained.
The conductive roller of the comparison example 3 containing the ionic conductivity imparting agent as the conductive agent of the coating layer had no problems in the electrical resistance value thereof both at the initial stage and after the paper-feeding durability test finished and the printed image, but after the storage test finished, the conductive roller stuck to the photoreceptor, and a large number of lateral stripes were generated in the printed image.

0099 On the other hand, each of the conductive rollers of the examples 1 through 6 containing the conductive carbon nanotubes as the conductive agent of the coating layer had a proper range in the electrical resistance value thereof and had a small electrical resistance variation at the applied voltages of 100V and 500V both at the initial stage and after the paper-feeding durability test finished. Further each of the conductive rollers had a very small difference not more than 10^{1.0}Ω between the electrical resistance value thereof at the applied voltage of 100V and the electrical resistance value thereof at the applied voltage of 500V after the paper-feeding durability test finished. Because the degree of the dependence of the electrical resistance value on a voltage is very low, good printed images were obtained.
After the storage test finished, the conductive rollers did not stick to the photoreceptor, and clear printed images were obtained.
The conductive rollers of the examples 1 through 6 effectively prevented the durability deterioration, maintained good charging characteristic and storage performance for a long time, and were excellent in its printing characteristic.

0100 A conductive roller of a second embodiment which is used as a paper-feeding roller is described below.
The conductive roller of the second embodiment is similar to the conductive roller 10 of the first embodiment in the construction thereof except that the composition of the coating layer 13 of the conductive roller of the second embodiment is different from the degree of the coating layer 13 of the conductive roller of the first embodiment. Therefore illustration of the conductive roller of the second embodiment is omitted herein and the same constituent parts thereof as those of the conductive roller of the first embodiment are described below by attaching the same reference numerals as those of the conductive roller 10 of the first embodiment to the constituent parts of the conductive roller of the second embodiment.
In the coating layer 13 of the second embodiment, carbon nanotubes are uniformly dispersed in the polyurethane resin obtained by thermosetting the polyol compound and the isocyanate compound.

0101 The coating layer 13 is formed by applying the surface-treating liquid in which the carbon nanotubes are dispersed in the medium containing the polyol compound and the isocyanate compound and/or the reactant of the polyol compound and the isocyanate compound to the surface of the conductive elastic layer 11 and thereafter performing hardening heat treatment.
The polyol compound and the isocyanate compound, and the reactant of the polyol compound and the isocyanate compound are dispersed and/or dissolved in the medium.

0102 In the method of preparing the surface-treating liquid which forms the coating layer 13, after a carbon nanotube-dispersed liquid (A) in which the carbon nanotubes are dispersed in water and a liquid (B) in which the polyol compound and the isocyanate compound are dispersed and/or dissolved in water are prepared separately, both liquids are mixed with each other to obtain the surface-treating liquid. Because the carbon nanotube-dispersed liquid (A) is prepared in a manner similar to that used in the first embodiment, the description thereof is omitted herein.

0103 The liquid (B) in which the polyol compound and the isocyanate compound are dispersed and/or dissolved in water are prepared as described below.
As the polyol compound, acrylic polyols and urethane polyols are used. The isocyanate compound containing aliphatic and/or alicyclic diisocyanate into which a hydrophilic group such as polyether, carboxylate or sulfonate is introduced is used. By dispersing and/or dissolving these compounds in water, the liquid (B) is prepared. In detail, the isocyanurate body of hexamethylene diisocyanate into which an ammonium salt of carboxylic acid was introduced was used.

0104 The isocyanate group of the isocyanate compound may be blocked with oximes, β-diketones or ε-caprolactams. The surface-treating liquid containing the isocyanate compound in which the isocyanate group is blocked is capable of suppressing the reactivity of the isocyanate group. Thus the surface-treating liquid is excellent in its storage performance.

0105 Thereafter the surface-treating liquid of the second embodiment is prepared by mixing the carbon nanotube-dispersed liquid prepared previously with the liquid in which the polyol compound and the isocyanate compound are dispersed.
So long as the effect of the present invention is not inhibited, as desired, the conductive carbon black, the lubricant, and the like are added to the surface-treating liquid. In adding the lubricant to the surface-treating liquid, the mixing amount of the lubricant is selected from the range of 5 to 20 mass% in the surface-treating liquid.
The carbon nanotube is contained at not less than 0.3 mass% nor more than 1.2 mass% in the surface-treating liquid obtained in the above-described manner.
The surface-treating liquid is prepared in the above-described mixing order in the second embodiment. But when the carbon nanotube, the polyol compound, and the isocyanate compound are uniformly present in the medium, the mixing order is not limited to the above-described mixing order. 0106 Because the conductive elastic layer 11 on which the coating layer 13 is formed and the method of producing the conductive elastic layer 11 are similar to those of the first embodiment, the description thereof is omitted herein. 0107 The method of treating the surface of the conductive elastic layer 11 with the surface-treating liquid, namely, the method of forming the coating layer 13 is similar to the degree of the first embodiment.

### [Method of Forming Coating Layer]

The surface-treating liquid is applied to the surface of the conductive elastic layer 11 by dipping a conductive roller having a core 12 and a conductive elastic layer 11 disposed on the periphery thereof in a dipping bath in which the surface-treating liquid prepared by using the above-described method was put and thereafter raising the conductive roller at 5mm/second.
Thereafter the conductive roller to which the surface-treating liquid has been applied is heated for 10 to 60 minutes inside an oven in which the temperature was set to not less than 130°C nor more than 200°C to allow a reaction between the polyol compound and the isocyanate compound both contained in the surface-treating liquid so that both compounds harden. Thereby the coating layer 13 containing the polyurethane as its matrix resin is formed.

0108 The coating layer 13 obtained in the above-described manner contains not less than 1.0 mass% nor more than 3.0 mass% of the carbon nanotube and not less than 92.0 mass% nor more than 99.0 mass% of the polyurethane resin obtained by the reaction between the polyol compound and isocyanate compound.
The thickness of the coating layer 13 is not less than 5µm nor more than 30µm.

0109 Because the carbon nanotubes are uniformly dispersed in the coating layer 13 of the conductive roller 10 of the second embodiment formed in the above-described manner, the coating layer 13 is excellent in its conductivity, has a very low degree of dependence on a voltage in its electrical resistance and a very low degree of variation in its electrical resistance, and further prevents the conductive agent from bleeding. In addition because the composition of the coating layer 13 contains the polyurethane resin obtained by the heat hardening reaction between the polyol compound and the isocyanate compound as its matrix, the coating layer 13 can be restrained from deteriorating in its durability and allows clear images to be provided over a long period of time.
Because water is used as the solvent in the surface-treating method, the surface-treating method improves the work environment conspicuously and the conductive roller 10 produced by the surface-treating method is environmentally friendly.
In the surface-treating method, water is used as the solvent. Therefore work environment is conspicuously improved and the conductive roller 10 is environmentally friendly.

0110 The examples of the second embodiment and the comparison examples are described below in detail.

### (Examples 7 through 11, Comparison Examples 5 through 8)

### [Preparation of Conductive Roller Having Conductive Elastic Layer]

0111 By using conductive thermoplastic elastomer compositions each containing the components at the mixing ratio shown in table 4, tubular extruded materials were prepared. A core (shaft) was inserted into each of the tubular extruded materials to prepare conductive rollers each having a conductive elastic layer used as a base material on which a coating layer was formed.

**Table 4**

| Component | Mixing amount (part by mass) |
|---|---|
| EPDM | 100 |
| SEEPS | 24.69 |
| PP | 10 |
| Crosslinking agent | 12 |
| Softener | 174 |
| Calcium carbonate | 30 |
| Carbon black | 10 |
| Compatibilizing agent | 6 |
| Conductive agent | 60 |
| TPEE | 50 |

0113 Because the method of producing the conductive elastic layer 11 and the components used are identical to those of the first embodiment, the description thereof is omitted herein.

0114 At the mixing ratios shown in Table 5, 6, surface-treating liquids of the examples and the comparison examples were prepared.

**Table 5**

| | Solid content | Example7 | Example8 | Example9 | Example10 | Example11 |
|---|---|---|---|---|---|---|
| Main component1 | 42% | | 85 | 85 | 85 | 59 |
| Main component2 | 41% | 100 | | | | |
| Hardener1 | 100.0% | 9 | 15 | 15 | 15 | |
| Hardener2 | 40.0% | | | | | 59 |
| Additive1 | 1.5% | 1.5 | 1.5 | 1.5 | 1.5 | 1.5 |
| Additive2 | 3.0% | 3 | 3 | 3 | 3 | 3 |
| Additive3 | 1.5% | 1.5 | 1.5 | 1.5 | 1.5 | 1.5 |
| Water | 0% | 17 | 26 | 26 | 26 | |
| Lubricant | 100.0% | 20 | 20 | 20 | 20 | 20 |
| CNT-dispersed liquid1 | 5.0% | 20 | 20 | | 10 | 20 |
| CNT-dispersed liquid2 | 3.0% | | | 33.3 | | |
| Conductive carbon-dispersed liquid | 16.5% | | | | 15 | |
| Ionic conductivity imparting agent | 100.0% | | | | | |
| Heat hardening condition (temperature, time period) | | 130°C,30min | 130°C,30min | 130°C,30min | 130°C,30min | 130°C,30min |
| Resistance value of roller (initial value) | Resistance of roller at 100V | 6.3 | 6.4 | 6.5 | 6.8 | 6.4 |
| | Resistance variation at 100V | 1.1 | 1.2 | 1.2 | 1.5 | 1.3 |
| | Resistance of roller at 500V | 6.1 | 6.2 | 6.1 | 6.2 | 6.2 |
| | Resistance variation at 500V | 1.1 | 1.1 | 1.2 | 1.1 | 1.1 |
| | Difference between resistances at voltages 100V and 500V | 0.2 | 0.2 | 0.4 | 0.6 | 0.2 |
| Resistance value of roller (after paper-feeding durability test finished) | Resistance of roller at 100V | 6.8 | 7.1 | 6.8 | 7.4 | 6.9 |
| | Resistance variation at 100V | 1.3 | 1.3 | 1.2 | 1.5 | 1.3 |
| | Resistance of roller at 500V | 6.2 | 6.4 | 6.2 | 6.4 | 6.3 |
| | Resistance variation at 500V | 1.2 | 1.1 | 1.1 | 1.2 | 1.1 |
| | Difference between resistances at voltages 100V and 500V | 0.6 | 0.7 | 0.6 | 1.0 | 0.6 |
| Image after paper-feeding durability | test finished | Good | Good | Good | Good | Good |
| After storage test finished | Sticking to photoreceptor | Did not occur | Did not occur | Did not occur | Did not occur | Did not occur |
| | Image | Good | Good | Good | Good | Good |

**Table 6**

| | Solid content | Comparison example5 | Comparison example6 | Comparison example7 | Comparison example8 |
|---|---|---|---|---|---|
| Main component1 | 42% | | 85 | 85 | 59 |
| Main component2 | 41% | 100 | | | |
| Hardener1 | 100.0% | 9 | 15 | 15 | |
| Hardener2 | 40.0% | | | | 59 |
| Additive1 | 1.5% | 1.5 | 1.5 | 1.5 | 1.5 |
| Additive2 | 3.0% | 3 | 3 | 3 | 3 |
| Additive3 | 1.5% | 1.5 | 1.5 | 1.5 | 1.5 |
| Water | 0% | 17 | 26 | 26 | |
| Lubricant | 100.0% | 20 | 20 | 20 | 20 |
| CNT-dispersed liquid1 | 5.0% | | | | |
| CNT-dispersed liquid2 | 3.0% | | | | |
| Conductive carbon-dispersed liquid | 16.5% | 20 | 20 | | 20 |
| Ionic conductivity imparting agent | 100.0% | | | 8.8 | |
| Heat hardening condition (temperature, time period) | | 130°C,30min | 130°C,30min | 130°C,30min | 130°C,30min |
| Resistance value of roller (initial value) | Electrical resistance of roller at 100V | 8.5 | 8.4 | 7.3 | 8.5 |
| | Electrical resistance variation at 100V | 6.0 | 6.3 | 1.4 | 6.5 |
| | Electrical resistance Variation at 500V | 6,3 | 6.3 | 6.2 | 6.1 |
| | Electrical resistance of roller at 500V | 1.2 | 1.1 | 1.1 | 1.1 |
| | Difference between resistances at voltages 100V and 500V | 2.2 | 2.1 | 1.1 | 2.4 |
| Resistance value of roller (after paper-feeding durability test finished) | Electrical resistance of roller at 100V | 9.5 | 9.3 | 8.0 | 8.8 |
| | Electrical resistance variation at 100V | 4.9 | 5.0 | 1.5 | 5.1 |
| | Electrical resistance of roller at 500V | 7.4 | 7.3 | 6.5 | 7.0 |
| | Electrical resistance variation at 500V | 1.2 | 1.1 | 1.3 | 1.2 |
| | Difference between electrical resistances at voltages 100Vand 500V | 2.1 | 2.0 | 1.5 | 1.8 |
| Image after paper-feeding durability test finished | | Many white spot generated by typographic error | Many white spot generated by typographic error | Good | Many white spot generated by typographic error |
| After storage test finished | Stricking to photoreceptor | Did not occur | Did not occur | Occurred | Did not occur |
| | Image | Fogged | Fogged | Lateral stripe | Fogged |

### [Preparation of Surface-Treating Agent]

### (Examples 7 through 11)

0117 As the carbon nanotube-dispersed liquids (CNT-dispersed liquids), commercially available products, shown below, in which carbon nanotubes are dispersed in water in advance were used.
In mixing the polyol compound (main component) and water with each other, after the water and the isocyanate compound (hardener) were mixed with each other, the additive, the lubricant, and the CNT-dispersed liquid were sequentially added to the mixture of the water and the isocyanate compound. Thereafter all the components were stirred and mixed with one another with a stirrer to prepare surface-treating liquids.

### (Comparison Examples 5 through 8)

In the comparison examples 5, 6, and 8, instead of the CNT-dispersed liquid, the conductive carbon-dispersed liquid was used to prepare surface-treating liquids. In the comparison example 7, instead of the CNT-dispersed liquid, the ionic conductivity imparting agent was used to prepare the surface-treating liquid.

0118 As the components shown in table 5, 6, the following products were used.
■Main component 1: Hydroxyl group-containing acrylic resin (acrylic polyol): ("Bayhydrol VPLS2058 (commercial name)" produced by Sumika Bayer Urethane Co., Ltd.)
■Main component 2: Hydroxyl group-containing polyurethane resin (urethane polyol): ("Bayhydrol PT241 (commercial name)" produced by Sumika Bayer Urethane Co., Ltd.)
■Hardener 1: Isocyanate compound (isocyanurate body of hydrophilic group-containing hexamethylene diisocyanate, unblocked), ("Bayhydur3100 (commercial name)" produced by Sumika Bayer Urethane Co., Ltd.)
■Hardener 2: Blocked isocyanate compound (hydrophilic group-containing tolylene diisocyanurate blocked with oxime), "TAKENATE WB-700 (commercial name)" produced by Mitsui Chemicals, Inc.
■Additive 1 (wetting agent): "POLYFLOW KL-510 (commercial name)" produced by KYOEISHA CHEMICAL CO., LTD.
■Additive 2 (antifoam): "SURFYNOL 104E (commercial name)" obtained by NISSIN CHEMICAL INDUSTORY CO., LTD.
■Additive 3 (dispersant): "PELEX OT-P (commercial name)" produced by Kao Corporation
■Water: Purified water
■Lubricant: Polyethylene powder "AcumistB-6(commercial name)" produced by Toyota Tsusho Corporation
■Carbon nanotube (CNT) dispersed liquid 1: "CNF-T/water 5% dispersed liquid" produced by Mitsubishi Materials Electronic Chemicals Co., Ltd. (oxidized type, 5 mass% of carbon nanotube is contained, dispersion solvent: water is contained as its main constituent element, volume resistivity of contained carbon nanotube powder; 4.0 × 10⁻²Ω·cm, diameter; 10 to 20mm, length; 0.1 to 10µm)
■Carbon nanotube (CNT) dispersed liquid 2: "CNF-T/water 3% dispersed liquid" produced by Mitsubishi Materials Electronic Chemicals Co., Ltd. (surface-active agent is used, 3 mass% of carbon nanotube is contained, dispersion solvent: water is contained as its main constituent element, volume resistivity of contained carbon nanotube powder; 4.0 × 10⁻²Ω·cm, diameter; 10 to 20mm, length; 0.1 to 10µm)
■Conductive carbon-dispersed liquid: "LION PASTE W-311N (commercial name)" (16.6 mass% of carbon black is dispersed) produced by lion Corporation
■ Ionic conductivity imparting agent: "PEL-20A (commercial name)" produced by Japan Carlit Co., Ltd.

0119 After the surface-treating liquid containing the components at the ratio shown in tables 5, 6 was applied to the outer surface of the conductive elastic layer of the prepared conductive roller by means of dipping and hardening heat treatment were performed at the treatment conditions shown in tables 5, 6. Thereby conductive rollers of the examples and comparison examples were prepared.
The thickness of the coating layer of the obtained conductive roller was 10 to 20µm.
The heat treatment was carried out in an oven in which temperature was set to 130°C.

0120 Tests (initial electrical resistance value of roller, electrical resistance variation, paper-feeding durability test, and storage test) similar to those of the examples of the first embodiment and the comparison examples were conducted for the conductive rollers of the examples and the comparison examples. Results are shown in tables 5 and 6. 0121 As shown in tables 5 and 6, each of the conductive rollers of the comparison examples 5, 6, and 8 containing only the conductive carbon black as the conductive agent of the coating layer had a very large electrical resistance variation not less than 10^{4.9}Ω at an applied voltage of 100V both at the initial stage and after the paper-feeding durability test finished. Further each of the conductive rollers had a very large difference not less than 10^{1.8}Ω between the electrical resistance value thereof at the applied voltage of 100V and the electrical resistance value thereof at the applied voltage of 500V. The conductive rollers caused a large number of white spots to be generated in the printed images by typographic error after the paper-feeding durability test finished. In addition, the images were fogged in the printing test conducted after the storage test finished. Thus clear printed images could not be obtained.
The conductive roller of the comparison example 7 containing the ionic conductivity imparting agent as the conductive agent of the coating layer had no problems in the electrical resistance value thereof both at the initial stage and after the paper-feeding durability test finished and the printed image, but after the storage test finished, the conductive roller stuck to the photoreceptor, and a large number of lateral stripes were generated in the printed image.

0122 On the other hand, each of the conductive rollers of the examples 7 through 11 containing the conductive carbon nanotubes as the conductive agent of the coating layer had a proper range in the electrical resistance value thereof and had a small electrical resistance variation at the applied voltages of 100V and 500V both at the initial stage and after the paper-feeding durability test finished. Further each of the conductive rollers had a very small difference not more than 10^{1.0}Ω between the electrical resistance value thereof at the applied voltage of 100V and the electrical resistance value thereof at the applied voltage of 500V after the paper-feeding durability test finished. Because the degree of the dependence of the electrical resistance value on a voltage is very low, good printed images were obtained.
After the storage test finished, the conductive rollers did not stick to the photoreceptor, and clear printed images were obtained.
The conductive rollers of the examples 7 through 11 effectively prevented the durability deterioration, maintained good charging characteristic and storage performance for a long time, and were excellent in its printing characteristic.

## Claims

1. A surface-treating liquid for coating a surface of a conductive member, wherein carbon nanotubes are dispersed in a medium in which a multi-isocyanate compound is dispersed and/or dissolved.

2. The surface-treating liquid according to claim 1, wherein isocyanate groups of said multi-isocyanate compound are blocked.

3. A surface-treating liquid for coating a surface of a conductive member, wherein carbon nanotubes are dispersed in a medium containing a polyol compound and an isocyanate compound and/or a reactant of said polyol compound and said isocyanate compound.

4. The surface-treating liquid according to claim 3, wherein said polyol compound is acrylic polyols or urethane polyols.

5. The surface-treating liquid according to any one of claims 1 through 4, wherein said carbon nanotubes are contained at a ratio of not less than 0.1 mass% nor more than 1.5 mass%.

6. The surface-treating liquid according to any one of claims 1 through 5, wherein said carbon nanotubes are contained in a total solid content at a ratio of not less than 0.5 mass% nor more than 5.0 mass%.

7. The surface-treating liquid according to any one of claims 1 through 6, wherein hydrophilic groups are introduced into said multi-isocyanate compound or said isocyanate compound; and said medium contains water at not less than 50 mass%.

8. A conductive member comprising a conductive elastic layer formed by using not less than one kind of an elastic material selected from a group consisting of a rubber, a resin, and a thermoplastic elastomer; and a coating layer covering a surface of said conductive elastic layer,
wherein said coating layer is formed with a surface-treating liquid as defined in claim 1 or 2.

9. A conductive member comprising a conductive elastic layer formed by using not less than one kind of an elastic material selected from a group consisting of a rubber, a resin, and a thermoplastic elastomer; and a coating layer covering a surface of said conductive elastic layer,
wherein said coating layer is formed with a surface-treating liquid as defined in claim 3 or 4.

10. The conductive member according to claim 8 or 9, which is a conductive roller to be mounted on an image-forming apparatus.

11. A method for treating a surface of a conductive elastic layer, wherein after a surface-treating liquid as defined in any one of claims 1 through 7 is applied to an outer surface of said conductive elastic layer formed by using not less than one kind of an elastic material selected from a group consisting of a rubber, a resin, and a thermoplastic elastomer, hardening heat treatment is performed to form a coating layer.
